Europäisches Patentamt

(19) European Patent Office

Office européen des brevets

(11) Publication number: **0 093 287**

A1

(12) # EUROPEAN PATENT APPLICATION

(21) Application number: 83103534.0

(51) Int. Cl.³: **F 16 D 13/68**

(22) Date of filing: 12.04.83

(30) Priority: 16.04.82 JP 63351/82

(43) Date of publication of application:
09.11.83 Bulletin 83/45

(84) Designated Contracting States:
DE FR GB

(71) Applicant: NISSAN MOTOR COMPANY, LIMITED
No.2, Takara-cho, Kanagawa-ku
Yokohama-shi Kanagawa-ken 221(JP)

(72) Inventor: Fukuda, Syozi
4688-1, Sobudai 3-chome
Zama-shi Kanagawa-ken(JP)

(72) Inventor: Kono, Satoshi
1435 Takematsu
Minamiashigara-shi Kanagwa-ken(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Vibration damper assembly in a clutch disk.

(57) A vibration damper assembly for use in a clutch disk comprises a first friction washer (44) disposed between one (20') of a pair of disk plates (20, 20') and a fork member (42) around the hub (12) of the clutch disk, a second friction washer (52) disposed radially outwardly of the first friction washer (44) and between the fork member (42) and the plate (16) of the hub extending between the pair of drive plates and/or between the plate (16) of the hub and a friction plate (48) adjacent to the other of the drive plates, the coefficient of friction of the second friction washer being larger than that of the first friction washer so that the second friction washer is adapted to operate when the clutch disk is shifted to a higher torsional rigidity range.

FIG. 2

EP 0 093 287 A1

# VIBRATION DAMPER ASSEMBLY IN A CLUTCH DISK

BACKGROUND OF THE INVENTION

The present invention relates generally to a clutch disk to be used in a power transmission apparatus of automobiles and the like, and more particularly to a device with changing damper characteristics for attenuating or damping undesirable vibrations in a clutch disk.

In general, when an automobile engine is started and then stopped or when a clutch of the power transmission gear is changed, adverse vibrations such as torsional vibrations or noises are transmitted from the engine to the power transmission apparatus. To prevent this, clutch disks are equipped with a vibration damper assembly comprising compression spring structures for arcuate action and friction means for absorbing such undesirable vibrations in the power transmission apparatus.

In such a vibration attenuating device in the clutch disk, it is necessary to essentially absorb or dampen the torsional vibrations and noises stated above, while enabling the substantial transmission of the torque from the engine to the wheels. And it is desirable to obtain the torque transmission characteristics such that: the torsional rigidity is lower in a smaller input torque zone to increase the displacement of the spring, thereby obtaining a higher absorbing or damping property; and the torsional rigidity is raised higher in a larger input torque zone to transmit the torque sufficiently. In addition, it is desirable to obtain characteristics such that the attenuation ability of the friction means also changes in proportion to the torque to be transmitted.

In conventional clutch disks as shown in U.S. Patent No. 4,188,806 and No. 4,279,132, the torsional rigidity of the compression spring structure can be changed or shifted in a plurality of ranges or stages in accordance with the value of the input torque; however, the adequate vibration attenuating or damping property for damping vibrations effectively in response to the change of the torsional rigidity cannot be realized due to various problems in the method for attachement of the friction means and in the selection of frictional materials, etc.

Therefore, there is a drawback that these vibrations and noises in the whole power transmission system are not damped enough, resulting in an unpleasant drive feeling for a driver.

SUMMARY OF THE INVENTION

It is a general object of the present invention to provide an improved vibration attenuating or damping device of a clutch disk which obviates the above described various drawbacks inherent in the prior art.

It is an object of the present invention to provide a vibration damper assembly in a clutch disk, which can effectively attenuate or damp substantially the undesirable vibrations and noises of the whole power transmission system of automobiles and the like over the entire range of the power transmitting operation.

It is another object of the invention to provide a vibration damper assembly in a clutch disk which can dampen effectively the vibrations and noises by way of the changing damper characteristics according to the value of the input torque.

It is a further object of the invention to provide a clutch disk which can smoothly transmit the driving torque of the engine, wherein the torsional rigidity and vibration attenuating ability changes or shifts in a plurality of ranges or stages in response to the magnitude of the input torque.

Briefly described, these and other objects of the invention are accomplished by the provision of an improved vibration damper assembly in a clutch disk, wherein a first friction means is disposed between one of a pair of drive plates and a fork member around the hub of the clutch disk, a second friction means is disposed between the fork member and the plate of the hub extending between the pair of drive plates, another second friction means may be disposed on the other side of the plate, that is to say, between the plate of the hub and a friction plate adjacent to the other drive plate, and the second friction means have a larger coefficient of friction than that of the first friction means, and are placed radially outwardly of the first friction means so that the second friction means are adapted to operate when the clutch disc is shifted to a higer torsional rigidity range.

BRIEF DESCRIPTION OF THE DRAWINGS

These and other objects, features and advantages of the present invention will be more appartent from the following description of a preferred embodiment, taken in conjunction with the accompanying drawings, in which:

FIG. 1 is a front elevational view of an improved clutch disk incorporating the present invention;

FIG. 2 is a cross sectional view taken along line II-II of FIG. 1; and

FIG. 3 is a graph showing a torsional property between the torsional angle and the torsional torque of the clutch disk according to an embodiment of the present invention.

DESCRIPTION OF THE PREFERRED EMBODIMENT

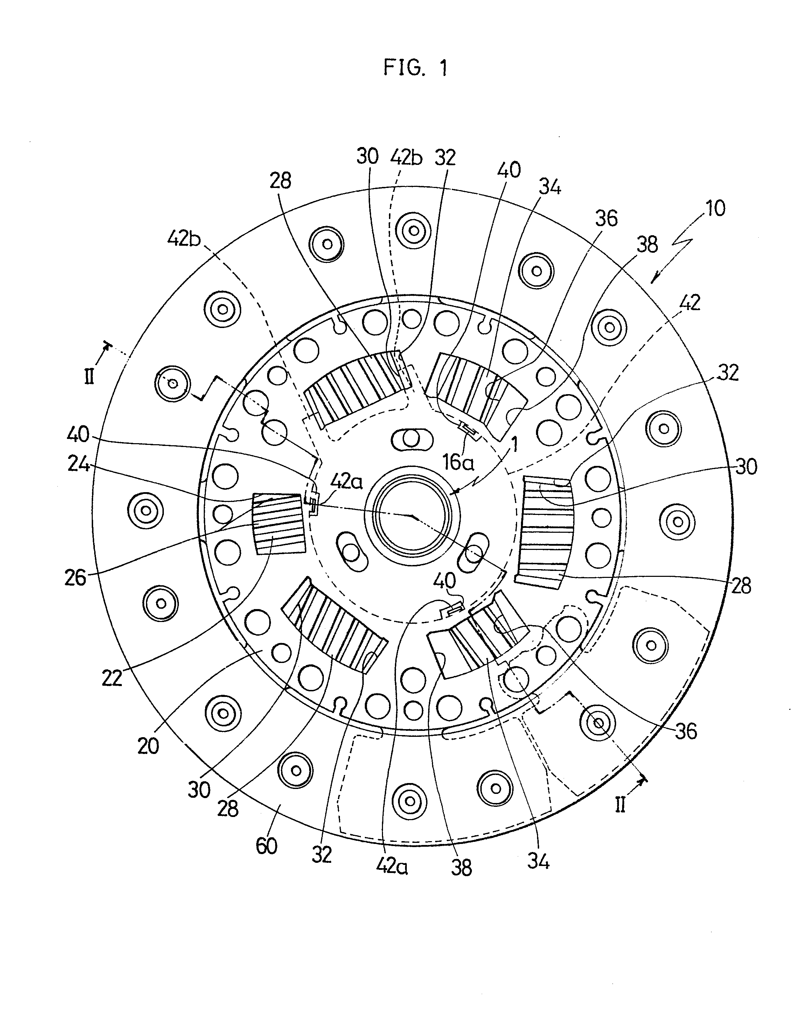

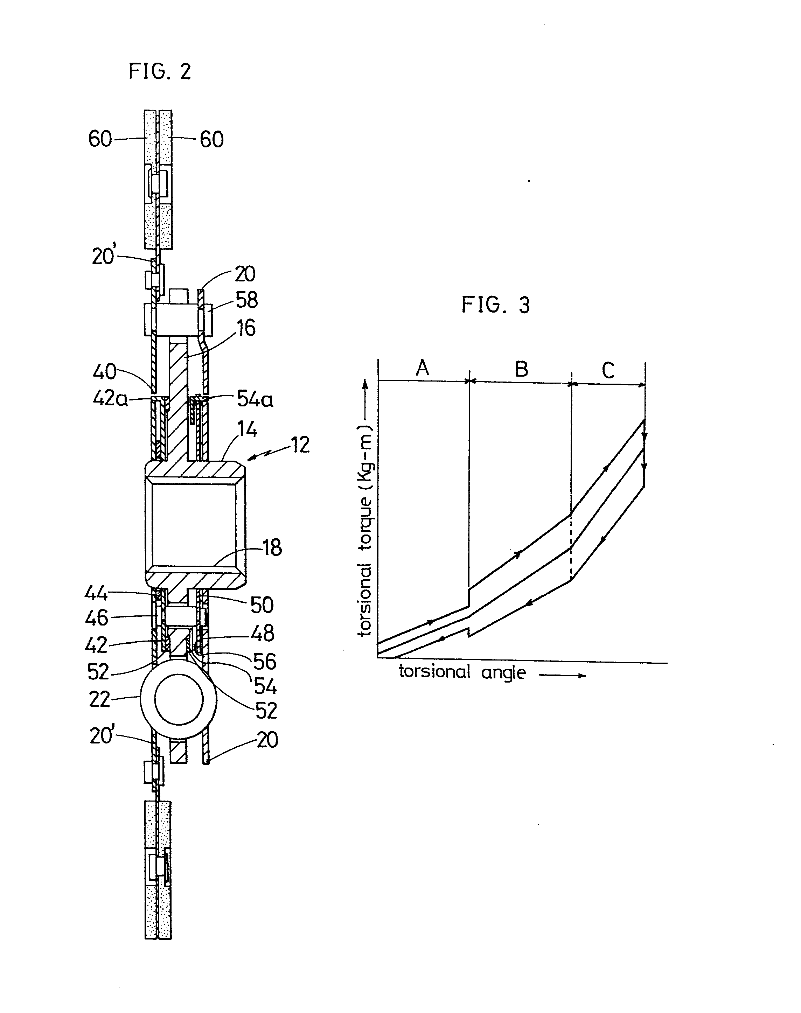

Referring to FIG. 1 and 2, there is generally indicated at 10 an embodiment of a clutch disk which includes a hub 12 having a boss 14 and a plate 16.

A spline 18 is formed in the boss 14 to connect the hub to an output shaft (not shown). A pair of drive plates 20 and 20' are so mounted that they sandwich the plate 16 of the hub 12. A plurality of compression springs 22 having different spring-load characteristics are arranged in series in the combined structure of the drive plates 20 and 20' and the plate 16 of the hub 12 so that the central axis of each spring draws an arcuate line along the circumferential direction of the plate 16 and the drive plates 20, 20', thereby enabling the relative rotation between the plate 16 and the drive plates 20, 20' and providing the changing damper characteristics of the clutch disk.

More specifically, a compression spring 22 for functioning at the first step of the changing damper characteristics is accommodated in a first set of openings 24 and 26 preferably under a desired initial load. These openings 24 and 26 are formed in the plate 16 of the hub 12 and the drive plates 20 and 20', respectively, with the same width in the circumferential direction. A compression spring 28 functioning at the second step of the changing damper characteristics is accommodated in each of three second sets of openings 30 and 32. The three sets of openings 30 and 32 are spaced apart from each other in the circumferential direction with the same interval of about 120 degrees therebetween. The openings 30, 32 are formed in the plate 16 of the hub 12 and the drive plates 20, 20', respectively, such that the width in the circumferential direction of the opening 30 of the plate 16 is smaller than that of the openings 32 of the drive plates 20, 20'. A compression spring 34 functioning at the third step of the changing damper characteristics is accommodated in each of two third sets of openings 36 and 38. The openings 36 and 38 are formed in the plate 16 and the drive plates 20 and 20', respectively, such that the width of the opening of the plate 16 is smaller than that of the openings 38 of the drive plate 20, 20' likewise, but the differece in width between the openings 36 and 38 in the circumferential direction is larger than that between the foregoing openings 30 and 32.

A small opening 40 is formed in at least one of the above-stated drive plates 20 and 20'. A fork member 42 is disposed between this drive plate 20' and the plate 16 of the hub 12. This fork member 42 has a standing tab member or claw member 42a and a pair of fork portions 42b. The claw member 42a is adapted to engage with the corresponding small opening 40 of the drive plate 20' with a predetermined play angle. The fork portions 42b are adapted to engage one of the compression springs 28 without play. The circumferential space between the fork portions 42b is the same as that of the opening 30 of the plate 16 which is adapted to accommodate the compression springs 28. In this case, the play angle of the claw member 42a in the small opening 40 of the drive plate 20' is set to be equal to the angle of relative rotation of the plate 16 and the drive plates 20 and 20' caused due to the difference in circumferential length between the openings 30 and 32 for accommodating the compression spring 28.

First friction means 44 comprising a friction washer is disposed between the drive plate 20' and the fork member 42. The first friction washer 44 is pressed in the axial direction by the spring force of a coned disc spring 50. This spring 50 is disposed between a friction plate 48 and the other drive plate 20. The friction plate 48 and the fork member 42 are attached to the plate 16 of the hub 12 therebetween, in other words the plate 16 is sandwiched by the friction plate 48 and the fork member 42. In this state, these three members are connected to each other by rivets 46.

Two second friction means 52 comprising friction washers are disposed between the fork member 42 and the plate 16 of the hub 12 and between the friction plate 48 and the plate 16 of the hub, respectively. Each of the second friction washers 52 has a larger coefficient of friction than that of the above-mentioned first friction washer 44. The second friction washers 52 are pressed in the axial direction by the spring force of a coned disc spring 56 directly or through a retainer plate 54 having at least one standing tab member 54a which engages the friction plate 48 without play.

The second friction washers 52 are placed radially outwardly of the first friction washer 44. The spring force of the coned disc spring 56 which forces the second friction washers 52 is set to be larger than that of the coned disc spring 50 which forces the first friction washer 44. A pair of dirve plates 20 and 20' mentioned previously are connected to each other by rivets 58. A main friction plate 60 is fixed to the drive plate 20'.

The operation of the clutch disk in accordance with this embodiment will be described hereinafter.

When the power torque of the engine is transmitted to the clutch disk having such a damper assembly, the drive plate 20' to which the main friction plate 60 is attached starts rotating along with the other drive plate 20, so that the compression springs 22, 28 and 34 are sequentially compressed to transmit the torque to the hub 12.

That is to say, upon rotaion of the drive plates 20 and 20', they rotate first against the compression spring 22 while receiving the frictional resistance by the first friction washer 44 until the trailing end of the small openings 40 of the drive plate 20' comes into contact with the claw member 42a of the fork member 42. Thus, the vibration is attenuated or dampened as shown in the first range or stage (area A) of FIG. 3. As described previously, the amount of the rotation at this time is substantially equal to the rotation angle caused due to the difference between the circumferential widths of the opening 30 of the hub 12 and the openings 32 of the drive plates 20 and 20' corresponding thereto. When the trailing end of the small opening 40 contacts with the claw member 42a, the trailing end of each of the openings 32 of the drive plates 20 and 20' abuts to the edge of the compression spring 28.

As the drive plates 20 and 20' further rotate and the clutch disk is shifted to a higher torsional rigidity range, the fork memer 42 starts rotating since the claw member 42a engages with the drive plate 20' at the trailing end of the small opening 40. Consequently, the drive plates 20 and 20' receive the frictional resistance caused by the second friction washer 52 which has a larger coefficient of friction than that of the first friction washer 44. At the same time, since the compression springs 28 besides the compression spring 22 are also compressed, the vibration is attenuated in the second range (indicated by area B) of FIG. 3.

Subsequently, the compression springs 34 are compressed by the relative movement between the openings 36 and 38, so that the compression springs 34 then function. Thus, the attenuating operation is shifted to the third range or stage (area C) of FIG. 3.

In the manner described previously, the clutch disk of the present invention has following advantages:

(i)      In a smaller input torque zone, the friction washer 44 having a relatively small coefficient of friction functions. In a larger torque zone, the friction washer 52 having a larger coefficient of friction than that of the washer 44 functions. Therefore, it is possible to effectively dampen the vibrations and noises by changing the friction attenuating ability in response to the magnitude of the input torque.

(ii)    The second friction washer 52 disposed radially outwardly of the first washer 44 is pressed into contact with the adjacent functional surfaces by the coned disc spring 56 having a larger spring force. Consequently, the friction attenuating ability of the second washer can be remarkably increased.

(iii)   Since the fork portions 42b engages the compression spring 28 without play, the fork member 42 can be sucurely returned to the initial location when the torsional torque is diminished. Therefore, the vibration can be effectively attenuated in both forward and backward directions.

It may be possible to disuse either or both of springs 50 and 56 each acting on the friction washers by adjusting the distances between the friction plate 48 and the fork member 42 to be connected thereto and between the drive plates 20 and 20'by changing the axial lengths of the rivets 46 and 58.

Two second friction washers 52 have been used in this embodiment; however, one of them may be disused. Furthermore, a fork member which is similar to the fork member 42 may be used in place of the friction plate 48.

Although, preferred embodiments of the present invention are specifically illustrated and described herein, it will be appreciated that many modifications and variations of the present invetion are possible in light of the above teachings and within the purview of the appended claims without departing from the spirit and intended scope of the invention.

WHAT IS CLAIMED IS :

1. In a clutch disk including a plate fixed to a hub and a pair of drive plates, the hub being connected to an output shaft, the drive plates rotatably attached to the plate, a vibration damper assembly comprising a plurality of compression spring structures for transmitting input torque exerted on the drive plates to the plate, said compression spring structures being arranged in series in the combined structure of the plate and the drive plates and having different spring-load characteristics, so that the torsional rigidity is smaller in the range of smaller input torque and is larger in the range of larger input torque, and a fork member disposed between the plate and one of the drive plates, said damper assembly characterized by a plurality of friction means having differnt coefficients of friction, said friction means associated with said compression springs for damping vibrations and noises in the clutch disk according to the relative rotation between the plate and the drive plates, said friction means being disposed between the plate and at least one of the drive plates, thereby providing a changing damper characteristics.

2. The vibration damper assembly as claimed in claim 1, in which said fork member is adapted to be engaged with one of the drive plates through the engaging means thereof with a predetermind play angle.

3. The vibration damper assembly as claimed in claim 2, in which a first friction means includes a first friction member disposed between said one of the drive plates and said fork member, a second friction means includes a second friction member disposed between said fork member and the plate, and said second friction means has a larger coefficient of friction than that of said first friction means.

4. The vibration damper assembly as claimed in claim 2, in which said first compression spring structure includes a spring and a first set of openings formed in the plate and the drive plates for receiving the spring, the width in the circumferential direction of the opening of the plate being set to be equal to that of the openings of the drive plates, said second compression spring structure includes a spring and a second set of openings formed in the plate and the drive plates for receiving the spring, the width in the circumferential direction of the opening of the plate being set to be smaller than that of the openings of the drive plates, and each said spring has a central axis drawing an arcuate line along the circumferential direction of the plate and the drive plates.

5. The vibration damper assembly as claimed in claim 4, in which the predetermined play angle between said fork member and said one of the drive plates is set to be equal to the angle of said relative rotation caused due to the difference in circumferential size of the openings of said second compression spring structure.

6. The vibration damper assembly as claimed in claim 3, in which the engaging means of said fork member comprises a standing tab member being adapted to engage with a corresponding small opening formed in said one of the drive plates with a play angle.

7. The vibration damper assembly as claimed in claim 5 or 6, in which said fork member further includes fork portions being adapted to engage the spring of the second compression spring structure.

8. The vibration damper assembly as claimed in claim 5, in which said third compression spring structure includes a spring and a third set of openings formed in the plate and the drive plates for receiving the spring, the width in the circumferential direction of the opening of the plate being smaller than that of the openings of the drive plates, and the difference in length of the openings of said third compression spring structure being larger than that of the openings of said second compression spring structure.

9. The vibration damper assembly as claimed in claim 8, in which the number of said second compression spring structures is three and the number of said third compression spring structures is two.

10. The vibration damper assembly as claimed in claim 3, further comprising a friction plate being attached to said plate of said hub so that the plate is sandwiched by the friction plate and said fork member with a predetermined play angle.

11. The vibration damper assembly as claimed in claim 10, in which said first friction means further includes a first spring disposed between the other drive plate and the friction plate for pressing the first friction member in the axial direction, and said second friction means further includes a second spring disposed between the plate and the friction plate for pressing the second friction member in the axial direction.

12. The vibration damer assembly as claimed in claim 3, in which the first and second friction members comprise a friction washer respectively.

13. The vibration damper assembly as claimed in claim 11, in which the first and second springs comprise a coned disc spring respectively.

14. The vibration damper assembly as claimed in claim 11, in which a second friction member is disposed between the plate and the second spring.

15. The vibration damper assembly as claimed in claim 14, in which a retainer plate is disposed between the second friction member and the second spring, and has at least one standing tab member engaging the friction plate without play.

FIG. 1

FIG. 2

60 — 60

20'

20
58
16

40
42a — 54a
14
12

18

44 — 50
46
42 — 48
52 — 56
54
22 — 52
20' — 20

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 863 747  (WERNER)  <br><br>* Column  1, line 62 - column 2, line 42; figures 1,2 * | 1,3,4, 7,12 | F 16 D    13/68 |
| X | FR-A-2 183 389  (FERODO) <br>* Page 4, line 21 - page 6, line 21; figures 1,2 * | 1,4,8 | |
| A | FR-A-2 225 307  (DAIMLER-BENZ) <br><br>* Page 3, line 25 - page 5, line 14; figures 1,2 * | 1,2,4, 7,12 | |
| A | FR-A-2 267 482  (FICHTEL-SACHS) <br><br>* Page 8, line 5 - page 9, line 5; figure 5 * | 1,3,6, 10-13 | **TECHNICAL FIELDS SEARCHED (Int. Cl. 3)** <br><br>F 16 D <br>F 16 F |
| A | GB-A-2 010 445  (BORG-WARNER) | | |
| A | GB-A-2 034 004  (BORG-WARNER) | | |

-----

The present search report has been drawn up for all claims

| Place of search <br>THE HAGUE | Date of completion of the search <br>13-07-1983 | Examiner <br>BARON C. |
|---|---|---|